## Europäisches Patentamt
## European Patent Office
## Office européen des brevets

(11) Publication number: **0 113 333**
**B1**

(12) **EUROPEAN PATENT SPECIFICATION**

(45) Date of publication of patent specification: **05.04.89**

(21) Application number: **84100001.1**

(22) Date of filing: **01.01.84**

(51) Int. Cl.⁴: **B 62 K 25/26,** B 62 M 9/00, B 60 G 7/02

(54) **Elastic suspension for rear wheels.**

(30) Priority: **04.01.83 IT 1240283**

(43) Date of publication of application:
**11.07.84 Bulletin 84/28**

(45) Publication of the grant of the patent:
**05.04.89 Bulletin 89/14**

(84) Designated Contracting States:
**AT CH DE FR GB LI SE**

(56) References cited:
**EP-A-0 001 344**
**FR-A- 811 057**
**FR-A-1 030 048**
**FR-A-2 198 587**
**GB-A-2 090 208**
**US-A-2 166 368**
**US-A-4 345 778**

(73) Proprietor: **DIAFIL INTERNATIONAL S.A.**
**Edificio Ford 7**
**Panama (PA)**

(72) Inventor: **Ribi, Valentino**
**Via Manuel Hurtado Ed. Celit**
**Panama (PA)** .

(74) Representative: **Ferrarotti, Giovanni et al**
**Studio Consulenza Tecnica Dr. Ing. Giovanni**
**Ferrarotti Via Alla Porta Degli Archi 1/7**
**I-16121 Genova (IT)**

Courier Press, Leamington Spa, England.

## Description

The invention relates to an elastic suspension for driving rear wheels of autovehicles, particularly of motorcycles or like-vehicles, and comprising two converging suspension arms, which by their upper ends are pivotally connected at two different pivot points to the vehicle frame, and by their lower ends are pivotally connected at two different pivot points to a rear wheel-carrying member, whereby an articulated quadrilateral is formed, that lies in a plane parallel to the rear wheel plane or to the longitudinal vertical median plane of the vehicle, the rear wheel-carrying member extending rearwards, outwardly of the articulated quadrilateral, and the rear wheel being mounted onto the said rearward extension.

An elastic suspension of this type is known from EP—A—0 001 344, in which means are however not provided for permitting to drive the rear wheel with a chain drive in combination with the said elastic suspension. Moreover, in the elastic suspension according to EP—A—0 001 344 the two suspension arms pivotally connected to the vehicle frame and to a wheel-carrying member diverge in the upward direction, and the pivot point of the upper end of the suspension arm, which is nearer to the wheel, is located at a lower level than the pivot point of the upper end of the other, suspension arm. In one particular embodiment, the suspension arm which is nearer to the wheel, is pivotally connected to the wheel-carrying member by its lower end, and is directed upwardly, while the other suspension arm is pivotally connected to the wheel-carrying member by its upper end, and is directed downwardly, so that the point for the pivotal connection to the vehicle frame of the lower end of the said suspension arm is located at a lower level than the pivot point of the upper end of the suspension arm which is nearer to the wheel.

The invention is based on the problem of providing the elastic suspension of the type as disclosed in the preamble with a chain drive, while simultaneously ensuring a good effect of counteracting the sinking of the rear of the vehicle during an acceleration (anti-squat effect) over the whole elastic excursion of the rear wheel.

From US—A—4 345 778 is known an elastic suspension for rear wheels of vehicles, which is similar to the suspension according to EP—A—0 001 344, but in which the pivot points of the upper ends of the two suspension arms are located at the same level, and in one embodiment the two suspension arms pivotally connected to the vehicle frame and to a wheel-carrying member converge in the upward direction. Neither in this US—A—4 345 778 are disclosed any chain drive means for driving the wheel carried by the elastic suspension, and from the embodiments as disclosed, it appears that it is extremely difficult to provide a chain drive, particularly a chain drive with a good anti-squat effect over the whole elastic excursion of the rear wheel.

From FR—A—2 198 587 is known an elastic suspension for the rear wheel of motorcycles, in which the wheel is mounted onto a simple wheel-carrying lever which is pivotally connected in a swingable manner to the motorcycle frame, and is driven by means of a chain led about a sprocket which is co-axial to, and is integral with the rear wheel, and about a driving sprocket fitted on the motorcycle frame, and about a guide sprocket fitted on the wheel-carrying swingable lever. The driving pinion fitted on the motorcycle frame is located at a higher level than the plane passing through the axis of the motorcycle rear wheel and the immovable real axis around which the wheel-carrying lever swings. The fixed position of the axis around which the wheel-carrying lever swings, does not permit to obtain a simultaneous anti-squat effect over the whole elastic excursion of the rear wheel. In fact, an initial, small anti-squat effect occurring in the fully expanded position of the suspension, is very soon annihilated, and it is even transformed into a squat effect during the excursion of the wheel.

In an elastic suspension according to the preamble of claim 1, the above disclosed problem is solved by the invention with the combination of the following features:

a) the two suspension arms converge upwardly;

b) the pivot point of the upper end of the suspension arm, which is nearer to the rear wheel, is located at a higher level than the pivot point of the upper end of the other suspension arm;

c) the rear wheel is driven through a drive chain engaged with a sprocket made integral of the said rear wheel and also led about at least one upper sprocket fitted on the vehicle frame;

d) the said upper sprocket fitted on the vehicle frame lies above the ideal plane passing through the instantaneous pivoting point on the rear wheel-carrying member and the axis (102) of the rear wheel, and also above the ideal horizontal plane passing through the instantaneous pivoting point of the suspension, at least in the unloaded (fully expanded) position of the suspension;

e) the upper sprocket on the vehicle frame is fitted in such a position as to permit the elastic excursion of the axis of the rear wheel along a path inclined from below upwardly in a backward direction, with any small changes in the length of the drive chain occurring within the limits of the slack usually existing or possibly allowed in the drive chain.

Some preferred embodiments of the invention are stated in the dependant claims.

The peculiar features of the invention and the advantages arising therefrom will clearly appear in the following specification of some preferred embodiments thereof, diagrammatically shown in side elevation views in the drawings, in which:

Figure 1 shows one embodiment of the invention, in which the driving rear wheel, which is supported by an articulated quadrilateral suspension is driven through only one drive chain.

Figures 2 and 3 show two variations of the embodiment according to figure 1.

In the drawing, reference numeral 1 denotes a piece of an autovehicle frame, more particularly of a motorcycle frame, and reference numeral 2 denotes a rear wheel of an autovehicle, more particularly the rear wheel of a motorcycle.

The elastic suspension for the rear wheel 2 consists of an articulated system which is contained in a plane being substantially parallel to the plane of the rear wheel 2, or to the longitudinal vertical median plane of the vehicle. This articulated system comprises two upwardly converging suspension arms 3 and 4, which by their respective upper end are pivotally connected at 103 and 104 to the vehicle frame 1. The lower ends of said suspension arms 3 and 4 are in turn pivotally connected at 203 and 204, to a rear wheel-carrying member 5, whereby an articulated quadrilateral is formed, with pivot points 103, 104, 204, 203, and with sides 1, 3, 4, 5.

Even though the two suspension arms 3, 4 always converge upwards toward each other, they may be inclined with respect to the vertical either in opposite directions such as in the illustrated example, or in the same direction, either backward or forward with respect to the direction of movement of the vehicle.

The rear wheel-carrying member 5 has an extension 105 extending rearwards outwardly of the said articulated quadrilateral, i.e., beyond the pivot point 204 for the suspension arm 4, and carrying the axle 102 of the rear wheel 2. In motorcycles or like vehicles, the wheel-carrying member 5 and its extension 105 form the fork for the rear wheel 2.

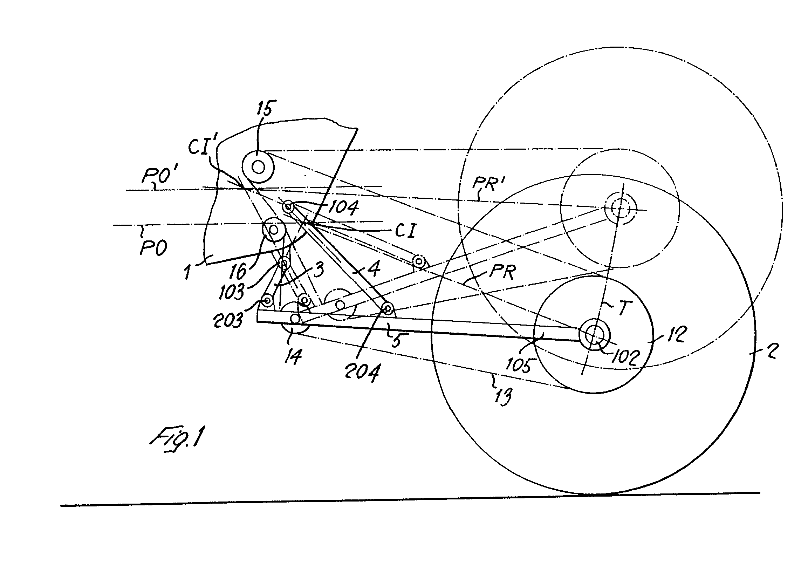

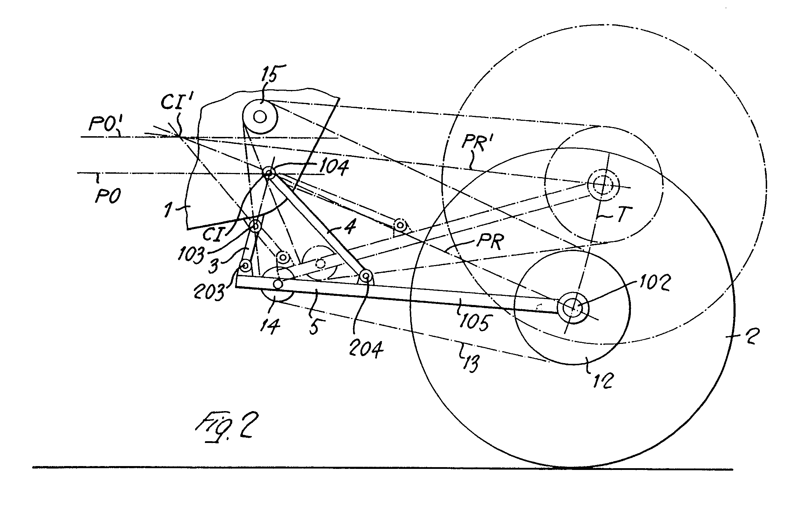

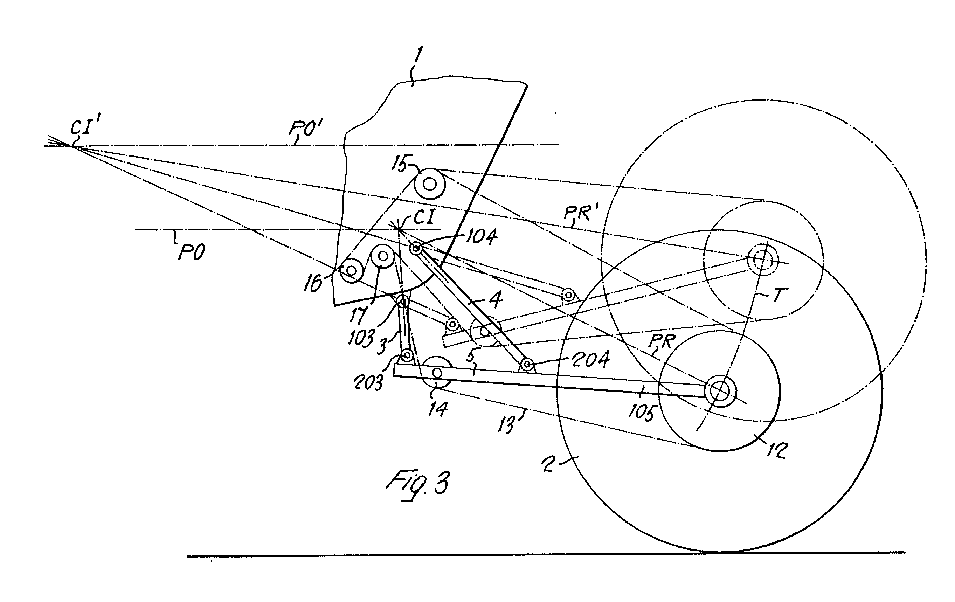

In the figures, the unloaded condition of the suspension according to the invention is shown by solid lines, while its maximum loaded condition is shown by dash-and-dot lines. The movement of the several members forming part of the articulated system will be then evident by observing the position these members assume in these two conditions. The path T along which the axle 102 of the rear wheel 2 performs its excursion, is also evident. In the illustrated embodiments, the excursion path T of the wheel axle 102 is almost rectilinear or slightly curved and is inclined, from below upwardly, in a backward direction, by making reference to the direction of movement of the vehicle. With the suspension according to the invention it is however possible to obtain, by simply modifying the geometry of the articulated system, an excursion of the rear wheel 2 along any desired path T and with any desired inclination and orientation, which will be the most suitable for adapting a particular autovehicle to any specific requirements of its intended use. It is clearly apparent that in the embodiment according to figure 1, the articulated quadrilateral forming the suspension is so constructed that when the suspension is in its unloaded condition, the instantaneous suspension pivoting point CI lies on the longer suspension arm 4. In the modified embodiment according to figure 2, the instantaneous suspension pivoting point CI is located, with the suspension in its unloaded condition, on the pivot 104 for the articulated connection of the longer suspension arm 4 to the vehicle frame 1. Whereas, in the modified embodiment according to figure 3, the instantaneous pivoting point CI of the suspension is located, with the suspension in its unloaded condition, at the ideal point of intersection of the ideal prolongations of the two suspension arms 3 and 4.

In the three embodiments according to figures 1 to 3, when the rear wheel 2 is a driving wheel, this rear wheel is driven through only one endless drive chain 13 led about the sprocket 12 on the rear wheel 2, and about a guide sprocket 14 fitted on the rear wheel-carrying member 5, as well as about one or more sprockets 15, 16, 17 fitted on the vehicle frame 1, at least one of these latter sprockets being a driving sprocket. More particularly, the guide sprocket 14 on the rear wheel-carrying member 5 is mounted in proximity of the pivot 203 or 204 for the articulated connection of one of the suspension arms 3 or 4 to the rear wheel-carrying member 5. Moreover, at least one of the sprockets fitted on the vehicle frame 1 (in the illustrated embodiments the sprocket 15) is located above the ideal plane PR passing through the instantaneous pivoting point CI of the suspension and through the axis of the rear wheel 2, and/or above the horizontal ideal plane PO passing through this instantaneous pivoting point CI. This condition relating to the position of the upper sprocket 15 will be valid at least in the unloaded (fully expanded) condition of the suspension, or in all the positions of the elastic excursion of the rear wheel 2, as it appears from the maximum loaded (fully contracted) condition of the suspension, shown by dash-and-dot lines, in which the said planes PO and PR, corresponding to the loaded (fully contracted) condition of the suspension, and passing through the instantaneous pivoting point CI' of the suspension, are designated by PO' and PR'. More particularly, in the embodiment according to figure 1, on the vehicle frame 1 there is provided — in addition to the said upper sprocket 15 — only another sprocket 16 for the drive chain 13. One of the said sprockets, such as, for example, the sprocket 16 located at a lower level than the upper sprocket 15, is formed as a, driving sprocket, while the other sprocket 15 is only a guide sprocket.

In the modified embodiment according to figure 2, on the vehicle frame 1 there is only provided the upper sprocket, 15, which is therefore constructed as a driving sprocket for, the drive chain 13.

In the modified embodiment according to figure 3, the, drive chain 13 is led not only about the said upper sprocket 15 that overlies the planes PO and/or PR, but also about two other sprockets 16 and 17 fitted on the vehicle frame 1. Any one of these sprockets 15, 16, 17, and for example the sprocket 16, may be the driving sprocket.

In any case, in the embodiments according to figures 1 to 3, the position of the guide sprocket 14 fitted on the rear wheel-carrying frame 5, and the position of the upper sprocket 15 fitted on the vehicle frame 1, are so selected that any changes in the length of the drive chain 13, which are due to the elastic excursion of the rear wheel 2, will be always small, and will be absorbed by the slack normally existing or being allowed in the drive chain.

In the drawings, the one or more spring means and the respective shock absorber or absorbers for the shown suspensions have been omitted. These spring means and the respective shock absorber or absorbers may be constructed in any suitable manner and may be provided between any locations or members of the suspension, which tend to be relatively moved with respect to one another owing to the load, such as, for example, between the vehicle frame 1 and any one of arms 3, 4, 5 or pivot points 203, 204 of the articulated system, or between any arm or pivot point of the articulated system.

The suspension according to the invention can be applied to the rear wheel or wheels of any vehicle with two, three, four, or more wheels, to the rear wheels of motorcycles, motorcars, trucks, and like vehicles, as well as to the wheels of the undercarriages of airplanes and like crafts.

By this invention, the possibility of performing a long elastic excursion is given to the rear wheel, with the effect of counteracting its sinking during an acceleration, and its raising when braked, and/or with the effect of progressively reducing the ratio between the excursion of the wheel and the excursion of the shock absorber, particularly toward the end of their travel.

**Claims**

1. An elastic suspension for driving rear wheels (2) of autovehicles, particularly of motorcycles or like vehicles, comprising two converging suspension arms (3, 4) which by their upper ends are pivotally connected at two different pivot points (103, 104) to the vehicle frame (1), and by their lower ends are pivotally connected at two different pivot points (203, 204) to a rear wheel-carrying member (5), whereby an articulated quadrilateral (103, 104, 203, 204 — 1, 3, 4, 5) is formed, that lies in a plane parallel to the rear wheel plane or to the longitudinal vertical median plane of the vehicle, the rear wheel-carrying member (5) extending rearwards, outwardly of the articulated quadrilateral (103, 104, 204, 203 — 1, 3, 4, 5), and the rear wheel (2) being mounted onto the said rearward extension (105) of the rear wheel-carrying member (5), characterized by the combination of the following features:

a) the two suspension arms (3, 4) converge upwardly;

b) the pivot point (104) of the upper end of the suspension arm (4), which is nearer to the rear wheel (2), is located at a higher level than the pivot point (103) of the upper end of the other suspension arm (3);

c) the rear wheel (2) is driven through a drive chain (13) engaged with a sprocket (12) made integral of the said rear wheel (2) and also led about at least one upper sprocket (15) fitted on the vehicle frame (1);

d) the said upper sprocket (15) fitted on the vehicle frame (1) lies above the ideal plane (PR) passing through the instantaneous pivoting point (I) on the rear wheel-carrying member (5) and the axis (102) of the rear wheel (2), and also above the ideal horizontal plane (PO) passing through the instantaneous pivoting point (CI) of the suspension, at least in the unloaded (fully expanded) position of the suspension;

e) the upper sprocket (15) on the vehicle frame (1) is fitted in such a position as to permit the elastic excursion of the axis (102) of the rear wheel (2) along a path (T) inclined from below upwardly in a backward direction, with any small changes in the length of the drive chain (13) occurring within the limits of the slack usually existing or possibly allowed in the drive chain (13).

2. The suspension according to claim 1, characterized in that the said upper sprocket (15) fitted on the vehicle frame (1) is the driving sprocket.

3. The suspension according to claim 1, characterized in that the said upper sprocket (15) fitted on the vehicle frame (1) is a guide sprocket, the drive chain (13) being led about one or more additional sprockets (16, 17) fitted on the vehicle frame (1), and one of these sprockets (16, 17) being the driving sprocket.

4. The suspension according to any one of claims 1 to 3, characterized in that the drive chain (13) is led about at least one guide sprocket (14) fitted on the wheel-carrying member (5).

5. The suspension according to claim 4, characterized in that the guide sprocket (14) on the wheel-carrying member (5) is fitted on, or near to the pivot (203) for the articulated connection of one (3) of the suspension arms (3, 4) to the wheel-carrying member (5) itself.

6. The suspension according to any one of claims 1 to 5, characterized in that the path (T) of the elastic excursion of the axle (102) of the rear wheel (2) is almost rectilinear or slightly curved.

**Patentansprüche**

1. Federnde Aufhängung für angetriebene Hinterräder (2) von Kraftfahrzeugen, insbesondere von Motorrädern od.dgl. Fahrzeugen, mit zwei konvergierenden Aufhängearmen (3, 4), die an ihrem oberen Ende schwenkbar an zwei verschiedenen Drehpunkten (103, 104) mit dem Fahrzeugrahmen (1) und an ihren unteren Enden schwenkbar an zwei verschiedenen Drehpunkten (203, 204) mit einem Tragorgan (5) für das Hinterrad verbunden sind, wobei ein Gelenkviereck (103, 104, 203, 204, — 1, 3, 4, 5) gebildet wird, das in einer Ebene liegt, die parallel zur Ebene des Hinterrades oder zur mittleren vertikalen Längsebene des Fahrzeuges verläuft, wobei sich das Tragorgan (5) für das Hinterrad außerhalb des Gelenkviereckes (103, 104, 204, 203 — 1, 3, 4, 5) nach hinten erstreckt und das Hinterrad (2) an dieser rückwärtigen Erstreckung (105) des Tragorganes (5) angeordnet ist, gekennzeichnet durch die Kombination folgender Merkmale:

a) Die beiden Aufhängearme (3, 4) konvergieren nach oben;

b) Der Drehpunkt (104) des oberen Endes des Aufhängearmes (4), der dem Hinterrad (2) näher ist, ist höher angeordnet als der Drehpunkt (103) des oberen Endes des anderen Aufhängearmes (3);

c) Das Hinterrad (2) wird durch eine Antriebskette (13) angetrieben, die in ein Kettenrad (12) des Hinterrades (2) eingreift und über mindestens ein am Fahrzeugrahmen (1) angeordnetes oberes Kettenrad (15) geführt ist;

d) Mindestens in der unbelasteten (voll ausgedehnten) Stellung der Aufhängung liegt das am Fahrzeugrahmen (1) befestigte obere Kettenrad (15) oberhalb der ideellen Ebene (PR), die durch den momentanen Drehpunkt (CI) des Tragorganes (5) des Hinterrades und der Achse (102) des Hinterrades (2) durchgeht, und oberhalb der ideellen horizontalen Ebene (PO), die durch den momentanen Drehpunkt (CI) der Aufhängung durchgeht;

e) Das obere Kettenrad (15) am Fahrzeugrahmen (1) ist in einer solchen Stellung befestigt, daß es die federmde Auslenkung der Achse (102) des Hinterrades (2) entlang eines Weges (T) erlaubt, der von unten nach oben und hinten geneigt ist, wobei kleine Längenänderungen der Antriebskette (13) innerhalb des durch den üblicherweise bestehenden bzw. möglichen Durchhang der Antriebskette (13) eintreten.

2. Aufhängung nach Anspruch 1, dadurch gekennzeichnet, daß das am Fahrzeugrahmen (1) angebrachte obere Kettenrad (15) das Antriebsrad ist.

3. Aufhängung nach Anspruch 1, dadurch gekennzeichnet, daß das am Fahrzeugrahmen (1) angebrachte obere Kettenrad (15) ein Führungsrad ist, wobei die Antriebskette (13) über ein oder mehr am Fahrzeugrahmen (1) angebrachte zusätzliche Kettenräder (16, 17) geführt ist und eines dieser Kettenräder (16, 17) das Antriebsrad ist.

4. Aufhängung nach einem der Ansprüche 1 bis 3, dadurch gekennzeichnet, daß die Antriebskette (13) über mindestens ein am Tragorgan (5) für das Rad angebrachtes Führungsrad (14) geführt ist.

5. Aufhängung nach Anspruch 4, dadurch gekennzeichnet, daß das Führungsrad (14) am Tragorgan (5) für das Rad am oder nahe dem Drehpunkt (203) für die gelenkige Verbindung eines (3) der Aufhängarme (3, 4) am Tragorgan (5) angeordnet ist.

6. Aufhängung nach einem der Ansprüche 1 bis 5, dadurch gekennzeichnet, daß der Weg der federnden Auslenkung der Achse 102 des Hinterrades (2) fast gerade oder leicht gekrümmt ist.

**Revendications**

1. Suspension élastique pour roues arrière d'entrainement (2) des véhicules automobiles, en particulier des motocyclettes ou autres véhicules analogues, comprenant deux bras de suspension convergente (3, 4) qui, par leurs extrémités supérieures, sont reliés en pivotement à deux points de pivotement différents (103, 104) du châssis du véhicule (1) et par leurs extrémités inférieures sont reliés en pivotement à deux points de pivotement différents (203, 204) de l'élément (5) porteur de roue arrière, de façon à former un quadrilatère articulé (103, 104, 203, 204 — 1, 3, 4, 5) qui se trouve dans un plan parallèle au plan de la roue arrière ou au plan médian longitudinal vertical du véhicule, l'élément (5) porteur de roue arrière s'étendant vers l'arrière et vers l'extérieur du quadrilatère articulé (103, 104, 204, 203 — 1, 3, 4, 5) et la roue arrière (2) étant montée contre ledit prolongement arrière (105) de l'élément (5) porteur de roue arrière, caractérisée par la combinaison des dispositions suivantes:

a) les deux bras de suspension (3, 4) convergent vers le haut;

b) le point de pivotement (104) de l'extrémité supérieure du bras de suspension (4) qui est le plus proche de la roue arrière (2) est situé à un niveau plus élevé que le point de pivotement (103) de l'extrémité arrière de l'autre bras de suspension (3);

c) la roue arrière (2) est entrainée par l'intermédiaire d'une chaine d'entrainement (13) engrenée avec une roue dentée (12) faisant partie intégrante de ladite roue arrière (2) et passant également autour d'au moins une roue dentée supérieure (15) montée sur le châssis du véhicule (1);

d) ladite roue dentée supérieure (15) montée sur le châssis du véhicule (1) se situe dans le plan idéal (PR) passant par le point (CI) de pivotement instantané de l'élément (5) porteur de roue arrière et par l'axe (102) de la roue arrière (2), et également au-dessus du plan horizontal idéal (PO) passant par le point (CI) de pivotement instantané de la suspension, au moins dans la position à vide (complètement étendue) de la suspension;

e) la roue dentée supérieure (15) sur le châssis du véhicule (1) est installée en une position qui permet la course élastique de l'axe (102) de la roue arrière (2) le long d'une trajectoire (T) inclinée du bas vers le haut dans une direction arrière, les éventuelles petites variations de la longueur de la chaîne d'entraînement (13) qui se produisent dans les limites du jeu existant habituellement ou éventuellement admis dans la chaine d'entraînement (13).

2. Suspension selon la revendication 1, caractérisée en ce que ladite roue dentée supérieure (15) installée sur le châssis du véhicule (1) est la roue dentée d'entraînement.

3. Suspension selon la revendication 1, caractérisée en ce que ladite roue dentée supérieure (15) montée sur le châssis du véhicule (1) est une roue dentée de guidage, la chaîne d'entraînement (13) étant passée autour d'une ou plusieurs roues dentées supplémentaires (16, 17) montées sur le châssis du véhicule (1), et l'une de ces roues dentées (16, 17) étant la roue dentée d'entraînement.

4. Suspension selon l'une quelconque des revendications 1 à 3, caractérisée en ce que la chaîne d'entraînement (13) passe autour d'au moins une roue dentée de guidage (14) montée sur l'élément (5) porteur de roue.

5. Suspension selon la revendication 4, caractérisée en ce que la roue dentée de guidage (14) de l'élément (5) porteur de roue est montée, ou proche, du pivot (203) pour la liaison articulée de l'un (3) des bras de suspension (3, 4) sur l'élément (5) porteur de roue lui-même.

6. Suspension selon l'une quelconque des revendications 1 à 5, caractérisée en ce que la trajectoire (T) de la course élastique de l'axe (102) de la roue arrière (2) est presque rectiligne ou légèrement courbe.

Fig.1

EP 0 113 333 B1

Fig. 2

Fig.3